(19) Europäisches Patentamt
European Patent Office
Office européen des brevets

(11) **EP 2 553 661 B1**

(12) **EUROPEAN PATENT SPECIFICATION**

(45) Date of publication and mention of the grant of the patent:
**01.07.2015 Bulletin 2015/27**

(51) Int Cl.:
***G06T 7/60*** *(2006.01)*

(21) Application number: **11721641.6**

(22) Date of filing: **22.03.2011**

(86) International application number:
**PCT/IB2011/000633**

(87) International publication number:
**WO 2011/117720 (29.09.2011 Gazette 2011/39)**

(54) **A METHOD AND A SYSTEM TO DETECT AND TO DETERMINE GEOMETRICAL, DIMENSIONAL AND POSITIONAL FEATURES OF PRODUCTS TRANSPORTED BY A CONTINUOUS CONVEYOR, PARTICULARLY OF RAW, ROUGHLY SHAPED, ROUGHED OR HALF-FINISHED STEEL PRODUCTS**

VERFAHREN UND SYSTEM FÜR DEN NACHWEIS UND DIE BESTIMMUNG VON FORM-, GRÖSSEN- UND POSITIONSEIGENSCHAFTEN VON PRODUKTEN AUF EINEM MASSENFÖRDERER, IM BESONDEREN VON GROB GEFORMTEN, AUFGERAUTEN ODER HALBFERTIGEN STAHLROHPRODUKTEN

PROCÉDÉ ET SYSTÈME POUR DÉTECTER ET DÉTERMINER DES CARACTÉRISTIQUES GÉOMÉTRIQUES, DIMENSIONNELLES ET DE POSITION DE PRODUITS TRANSPORTÉS PAR UN TRANSPORTEUR CONTINU, NOTAMMENT DE PRODUITS EN ACIER BRUTS, DE FORME GROSSIÈRE, RUGUEUX OU SEMI-FINIS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2010 IT MI20100517**

(43) Date of publication of application:
**06.02.2013 Bulletin 2013/06**

(73) Proprietor: **Tenova S.p.A.**
**20149 Milano (IT)**

(72) Inventors:
• **MORI, Cristian**
 **I-16159 Genova (IT)**
• **CAMPODONICO, Marco**
 **I-16035 Rapallo (IT)**

(74) Representative: **Cosenza, Simona et al**
 **Barzanò & Zanardo Milano S.p.A.**
 **Via Borgonuovo, 10**
 **20121 Milano (IT)**

(56) References cited:
 **WO-A1-83/00738      DE-A1- 2 019 290**
 **JP-A- 2003 139 865    US-A- 4 152 767**

**Description**

The present invention refers to a method and to a system to detect and to determine geometrical, dimensional and positional features of products transported by a continuous conveyor.

In particular, the present invention refers to a method and to a system to detect and to determine geometrical, dimensional and positional features of raw, roughly shaped, roughed or half-finished steel products of the type for example of billets, thick slabs, coils, plates and the like, transferred between different work stations of the respective production line by means of a continuous conveyor.

In the field of steel metallurgy, the production lines of various products, even large products such as for example thick slabs, billets, coils and the like, have been made automated and are always object of further automation.

Along such production lines the products are transferred from one work station to another by means of continuous conveyors of the type for example of roller belts or conveyor belts.

The management of the production lines and their correct operation require the monitoring of the flow of products between the different work stations and the "tracking" of each product being processed.

In particular, it is necessary to know different dimensional, geometrical and positional parameters of the products.

In particular, it is necessary to be able to determine the position of a certain product with respect to the longitudinal axis of the continuous conveyor or with respect to the inlet of a certain work station, so as to be able to identify possible misalignments, rotations or orientations of such a product that could lead to situations of malfunctioning or of danger, and so as to be able to actuate suitable correction operations.

Moreover, it is necessary for example to know the dimensions and/or the masses of the products directed towards a certain work station and their time of arrival at such a station, so as to be able to intervene on its management and be able to optimize the operation thereof.

Let us consider a station consisting of an oven for heat treatments: knowing the dimensions, the masses and the time of arrival of a product, makes it possible to determine the heat necessary for its treatment and to consequently adjust the operation of the oven.

Or again it is necessary to be able to detect the shape of the products being processed and/or their surface appearance so as to be able to identify possible manufacturing defects.

With particular reference to the steel metallurgy field, different types of systems are known which make it possible to detect the dimensions (length, height, width) and possibly the weight of the products being processed:

- offline or online systems for detecting through contact;
- offline optical-mechanical detection systems;
- online detection systems through photocells and encoders,
- online detection systems through laser scanning.

Offline systems for detecting through contact or of the optical-mechanical type are made up of devices equipped with feelers or optical devices for measuring the dimensions of the product and of sensors for detecting the weight of the product.

An offline optical-mechanical detection system is for example described in KR2000-0019784.

Such measuring devices, also due to the dimensions of the steel products being processed, have considerable bulk and weight and require suitable installation areas. Moreover, they have a complex structure and, in addition to frequent and costly maintenance operations, they need offline operations to be carried out.

Contact measuring systems have also been applied online. In JP-2004-283865 for example, a system is known for detecting through contact, which is inserted along the line for cutting a continuous casting coil so as to obtain thick slabs of a certain length.

Such measuring systems, indeed because they are applied directly to the line (continuous conveyor), lead to a complication of the structure and an increase of the bulk of the line itself.

Online detection systems with photocells and encoders are based upon the use of at least one photocell placed next to the continuous conveyor, of the roller conveyor type, to detect the start and the end of a product and of at least an encoder associated with a roller of the conveyor. With such systems it is possible to detect at least the length of the product, except for possible sliding or misalignment with respect to the continuous conveyor; they, thus provide measurements affected by errors and that are not precise.

In order to avoid such a problem and to reduce the measurement error it is necessary to adopt complex systems of photocells or sensors, arranged both along the opposite sides, and above and below the plane of the continuous conveyor, so as to be able to determine possible sliding and to identify possible misalignments of the products.

Systems of this type are described for example in KR2004-0040562 or in JP02-26210.

This last document describes a system that makes it possible to determine online, both the length, and the width of a slab being processed, considering also its possible misalignments with respect to the longitudinal axis of the continuous conveyor.

Another system of this kind is described in US 4 152 767 A. This document discloses techniques for industrial measurements of selected dimensions of a wide variety of articles, e.g. steel slabs or wood logs being transported on a conveyor. The measurements employ one or more scanners, i.e. CCD sensors, whose line of sight is normal to the transport direction of the conveyor, a conventionally known digital speed sensor and a CPU used to count a number of pulses from the moment an object to be measured moves into the field of view of a scanner and the moment it leaves said field of view, whereby the time value defined by the number of pulses is transformed into a dimensional value by taking into account the speed value provided by the speed sensor.

Such detection systems through photocells and encoders, in addition to providing measurements that are not, in any case, very accurate, require the installation of complex arrangements of photocells and sensors near to the continuous conveyors, where the photocells and the sensors are exposed to a dirty environment and to considerable risks of being damaged. Cleaning and maintenance operations are thus frequently required by such systems and are costly.

The online detection systems through laser scanning make it possible to detect the length or the width of a product for example with the use of two time of flight laser sensors. The measurement obtained is given by the width of the signal in anticoincidence between the emitted laser beam and its reflected fraction.

Since the scanning of the product, in length or width, occurs in a mechanical manner, it requires time and, sometimes, the slowness of the scanning does not make it possible to highlight possible misalignments between the longitudinal axis of the products and the forwarding direction along the line.

Laser scanning systems also exist which sample a single point of the product, when the conveyor and, therefore, the product is still.

The measurements carried out are also affected by errors that are proportional to the forwarding speed of the products along the line.

Finally, it is often impossible to find an arrangement of the lasers that makes it possible to scan and measure the different types of products that can be conveyed along one same line, whatever their dimensions in length and width may be.

Such drawbacks have at least partially been overcome with detection systems in which the entire product is hit, on one or more faces, with one or more fans of radiation emitted by one or more lasers and in which a camera records the radiation incident on the product to obtain an image that is then processed. One example of such a system is described in JP11-291008.

Such systems are however costly, bulky and must be installed on the conveyor line, limiting the possibilities of intervention on it, for example for maintenance operations.

Finally, interferometric laser systems are known that, exploiting the *Doppler* effect, consider the movement of the product along the line. These last systems are however extremely costly and complex and therefore have limited application.

The purpose of the present invention is that of providing a method to detect and to determine geometrical, dimensional and positional features of products transported by a continuous conveyor, particularly of raw, roughly shaped, roughed or half-finished steel products, which makes it possible to avoid the drawbacks of known systems described above.

In particular, one purpose of the present invention is that of providing a method that makes it possible to detect the dimensions of a product transported by a continuous conveyor along a production line or machining line, particularly a raw, roughly shaped, roughed or half-finished steel product, while it is moving forward along the line itself, with sufficient precision and irrespective of possible sliding and/or accelerations of the product with respect to the continuous conveyor and of the dimensions of the product itself.

A further purpose of the present invention is that of providing a method that makes it possible to also detect the position and/or possible misalignments of the product with respect to the longitudinal axis of the continuous conveyor, i.e. with respect to the forwarding direction along the production line or machining line.

Another purpose of the present invention is that of providing a method that makes it possible to identify and recognize a product moving forward along a production line or machining line and to track its position along such a line.

Another purpose of the present invention is that of making a system to detect and to determine geometrical, dimensional and positional features of products transported by a continuous conveyor, particularly of raw, roughly shaped, roughed or half-finished steel products, that makes it possible to implement such a method with devices with low cost and that are readily available.

These purposes according to the present invention are achieved by making a method and a system to detect and to determine geometrical, dimensional and positional features of products transported by a continuous conveyor, particularly of raw, roughly shaped, roughed or half-finished steel products, as outlined in the independent claims.

Further characteristics of the method and of a system to detect and to determine geometrical, dimensional and positional features of products transported by a continuous conveyor, particularly of raw, roughly shaped, roughed or half-finished steel products, are foreseen in the dependent claims.

The characteristics and the advantages of a method and of a system to detect and to determine geometrical, dimensional and positional features of products transported by a continuous conveyor, particularly of raw, roughly shaped, roughed or half-finished steel products, according to the invention shall become clearer from the following description, given as an example and not for limiting purposes, with reference to the attached schematic drawings, in which:

figure 1 is a diagram representing a system according to the present invention;

figures 2a and 2b schematically show two successive images of the first image series acquired according to the method of the present invention, of which the second is identified as the initial image of the product;

figures 3a and 3b schematically show two successive images of the second image series acquired according to the method of the present invention, of which the first is identified as the final image of the product;

figures 4a, 4b and 4c schematically show two successive images of the second image series acquired according to the method of the present invention and the method for rating the displacement vector of the recognition area selected in the first of them with respect to the second;

figures 5 to 8 schematically show different configurations of the system according to the present invention;

figure 9 schematically shows a device for monitoring the flow of products transported by a continuous conveyor between different stations of a production or machining line, comprising a series of systems according to the present invention;

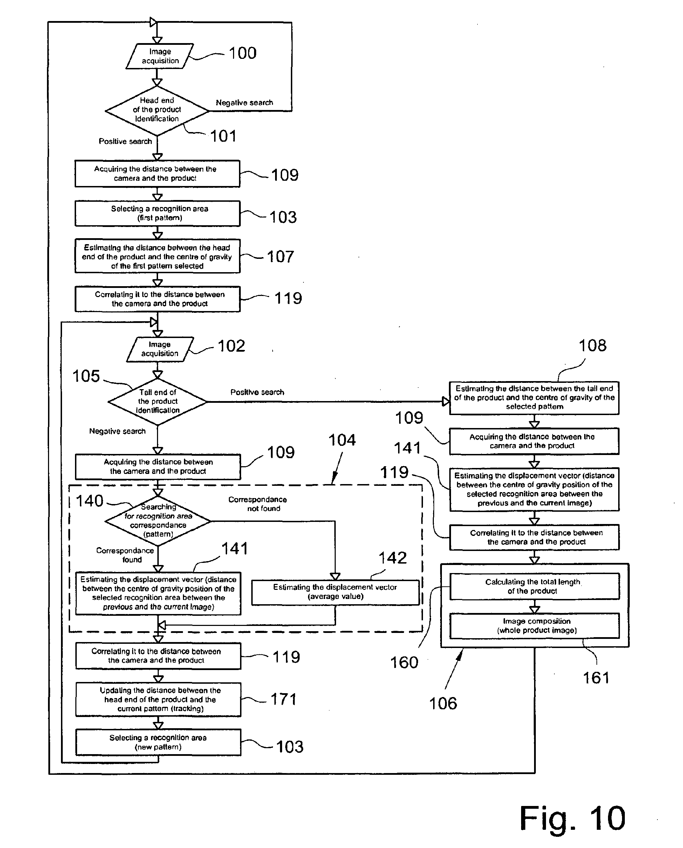

figure 10 is a flow chart representative of the method according to the present invention.

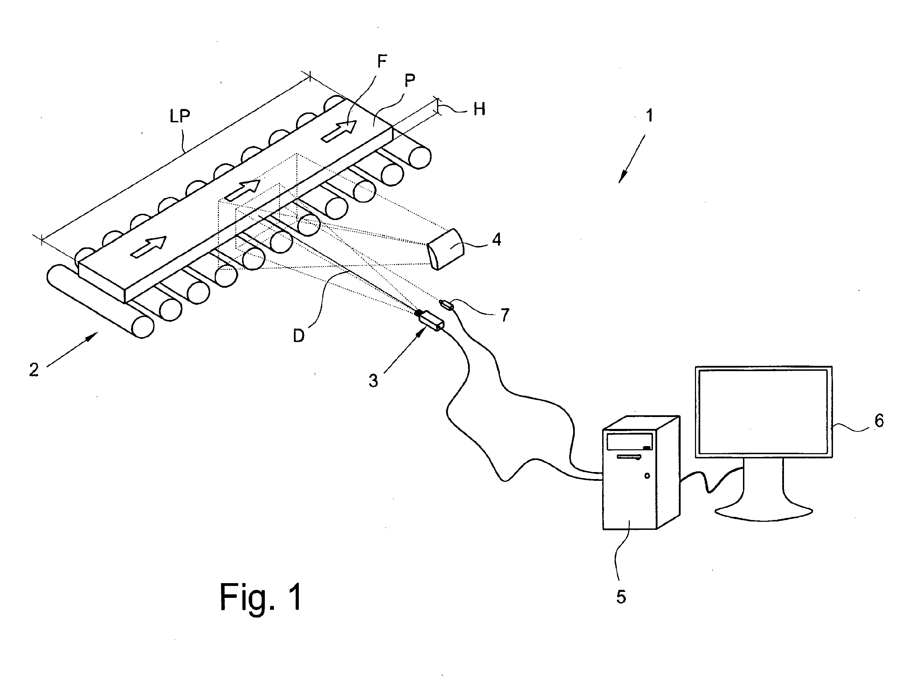

With reference to figure 1, a system to detect and to determine geometrical, dimensional and positional features of products transported by a continuous conveyor, particularly of raw, roughly shaped, roughed or half-finished steel products is wholly indicated with reference numeral 1.

The system 1 can be applied to any continuous conveyor 2 that transports products P along a forwarding direction F of a machining or production line, transferring them between different stations of the line itself.

The products P proceed along the forwarding direction F with a speed, that is even not known and not constant, but in any case, that is less than or equal to a maximum transport speed.

In the attached figures, the continuous conveyor 2 is of the roller conveyor type; it could also have a different structure, for example a conveyor belt.

The system 1 comprises at least an image acquisition device consisting of a camera 3 that is placed crosswise to the forwarding direction F and at a defined distance from the continuous conveyor 2.

The camera 3 is associated to a lighting device made up of a spot light 4 or another device, such as for example a strobe in step with the camera 3 or an invisible light (UV or IR) emitter, which hits the product P with a light beam such as to ensure a level of illumination necessary and sufficient for recording, preventing prolonged exposure time from negatively affecting the quality of the recorded images.

As shall become clearer in the following description, the camera 3 can be arranged with its axis on a plane vertical and orthogonal to the forwarding direction F and oriented with an angle $\alpha$ in respect to the vertical $0° \leq \alpha \leq 90°$ as long as the face of the product P in the frame is recorded for the entire width H crosswise with respect to the forwarding direction F.

The system 1, moreover, can comprise many cameras 3, each associated with a respective spot light 4, arranged so as to frame a different face of the product P with same or different camera angles.

With particular reference to figure 1, the system 1 comprises a camera 3 arranged with its axis with an angle $\alpha$ of 90° in respect to the vertical.

The camera 3 is associated to a processing unit 5 that comprises *software* means through which the images it has recorded are processed so as to detect and identify the product P, being able to track its passing by, and/or to determine at least one piece of geometrical, dimensional or positional data characteristic of the product P itself.

For such a purpose, the *software* means implement the method to detect and to determine geometrical, dimensional and positional features of products transported by a continuous conveyor, particularly of raw, roughly shaped, roughed or half-finished steel products, according to the present invention and described later on in the description.

The processing unit 5, moreover, is connected, through a suitable interface, to displaying means 6 and/or to at least a second central processing unit, not shown, so as to provide the data obtained for a further processing thereof, for example in the case in which it is necessary to "track" the forward direction of the product P along the production line, to intervene on the operation of the continuous conveyor 2 so as to modify or correct the forward direction of the product P or to intervene on the operation of a work station placed along the line.

In a preferred embodiment, moreover, the system 1 also comprises a device for detecting the distance between the camera 3 and the continuous conveyor 2 or the product P located on it, said distance detecting device being associated with the same processing unit 5.

Such a distance detecting device can be made up of a laser sensor 7 of the time of flight type.

Both the camera 3, and the spot light 4, as well as the possible laser sensor 7 are of the known type and are commonly available on the market and, when they are considered by themselves, do not form object of the present invention, therefore, they shall not be described any further.

The operation of the system 1 that implements the method according to the present invention is as follows.

The camera 3, placed in a fixed location with respect to the continuous conveyor 2 and at a defined distance from it, frames a same area across which runs the continuous conveyor 2 on which the product P rests.

Of such an area a first series of successive images is acquired (acquiring step 100).

When the product P transits in the area framed by the camera 3, among the images of such a first image series an initial image is identified including the head end of the product P, considered in respect to the forwarding direction F. Such a step is indicated as the identification step of the start of the product or of the head end of the product P (step 101). Until such an initial image has been identified, the system continues to acquire images of the first image series, i.e. images of the area across which runs the continuous conveyor 2.

From the moment in which the start of the product P has been identified, i.e. from the identification of the initial image, the camera 3 acquires at least a second series of successive images showing the product P moving forward along the forwarding direction F (image acquiring step 102).

The acquiring occurs with a frequency so as to obtain, at the maximum transport speed possible V, a partial overlapping of two successive images.

Such a condition is expressed by the following formula:

$$V*T \ < \ (1/n)*L$$

Where V is indeed the maximum transport speed possible for the products P, T is the time that passes between the acquiring of two successive images, L is the length, considered along the forwarding direction F, of each image and $n \geq 2$, so that two successive images overlap for at least a portion equal to L/n. Preferably n=2 and each image is considered divided by a midplane in two successive sections with equal dimensions, respectively indicated as the right section RD and the left section RS with respect to the forwarding direction F. In the following description, the forwarding direction F is considered, purely as an example, from left to right.

From the initial image and for each image of the second image series acquired, i.e. for each image of the product P acquired, the system 1 selects in it a recognition area A or recognition pattern (selecting step of a recognition area (pattern) 103).

By recognition area or recognition *pattern* we mean to indicate a portion of the image of the product that can be identified and recognized with respect to the remaining portion of the image. It is therefore necessary for the surface texture of the face of the product P recorded by the camera 3 to not be even or repetitive or, if repetitive, it must have repetitions that are at a distance from one another that is greater than the overall portion of product recorded in two successive images.

Therefore, the method according to the invention can be applied to all those products that satisfy such a condition.

Once a recognition area or pattern A in an image of the product P has been selected, the system estimates the displacement vector of such a recognition area or pattern A between the image of the product P where it was selected and an image following the one where it was selected (step 104).

This occurs until, between the images of the second image series, i.e. between the images acquired showing the product P, the final image is identified, i.e. an image containing the tail end of the product P considered in respect to the forwarding direction F (product end or tail end of the product 105 identification step).

The system 1 finally processes the estimated displacement vectors and/or the images of the product P acquired according to calculation and image processing algorithms so as to obtain at least a dimensional, geometrical or positional data feature of the product P (processing step 106).

Such a processing step 106 particularly comprises a calculation step, on the base of the estimated displacement vectors, of the overall length LP of the product P (step 160), and a joining step, on the base of the estimated displacement vectors, of the images of the product P, comprised between and comprising the initial image and the final image, so as to form a unique image identifying the product P, or rather its face recorded by the camera 3 (step 161).

The system 1 also comprises a step consisting of estimating the distance of the head end of the product P both respect to the recognition area or pattern A selected both in the initial image (first pattern selected - step 107), and in each image belonging to the second series of successive images showing the product P up to its final image (*tracking* step 171).

This makes it possible to obtain and keep track of the position of the head end of the product P, while it advances along the forwarding direction F.

In order to obtain a complete picture of the product P, the system 1 also foresees a step of estimating the distance of the tail end of the product P with respect to the recognition area selected in the image of the product preceding the final image (step 108).

For the processing of the displacement vectors in metric units for the calculation of dimensional, geometric or positional parameters of the product P, the system 1 also comprises, for each image of the product P acquired, including the initial image and its final image, a step consisting of acquiring and associating to such an image a positional and/or dimensional reference parameter on the base of which it processes the images and/or the displacement vectors related to them. In a preferred embodiment, to each image of the acquired product P is associated the distance D between the camera 3 and the portion of product P recorded in it (acquiring step of the distance between product and camera 109).

The distance value D thus acquired and associated with each image of the product is then correlated to the estimation of the displacement vector associated with such an image so as to be able to estimate the value in metric units (correlation step 119).

In a preferred embodiment, the system 1 also comprises a step consisting of associating to the initial image and to each image of the product acquired at least a time reference parameter selected between an absolute time reference parameter (referring to the camera 3) and a relative time reference parameter (referring to the continuous conveyor). On the basis of such a time parameter, the displacement vectors, the distance of the head end from the current image and the distance of the tail end of the product from its preceding image are then processed to determine the motion law of the product itself, being for example able to check for possible sliding or accelerations with respect to the continuous conveyor 2.

It should be understood that the aforementioned steps can be carried out successively and in real time with the acquisition of the images themselves.

It is not excluded however for the images to be first acquired and then processed in a moment that is delayed with respect to their acquisition.

Hereafter, some of the steps mentioned above are described in greater detail.

As indicated above, when a product P is not transiting through the area framed by the camera 3, the latter acquires a series of successive images of such an area which are stored (first image series - acquiring step 100).

In such images the system 1 identifies two control portions that are selected based upon the environment characteristics of the place in which the system operates and that are typically: a portion C1 in the right section RD and a portion C2 in the left section RS, where right and left refer to the forwarding direction F. The system 1 creates and updates a respective estimate function of the parameters of the image, typically a histogram function, of such control portions C1 and C2.

Such control portions C1 and C2 are used for identifying the initial image and the final image of the product P (steps 101 and 105).

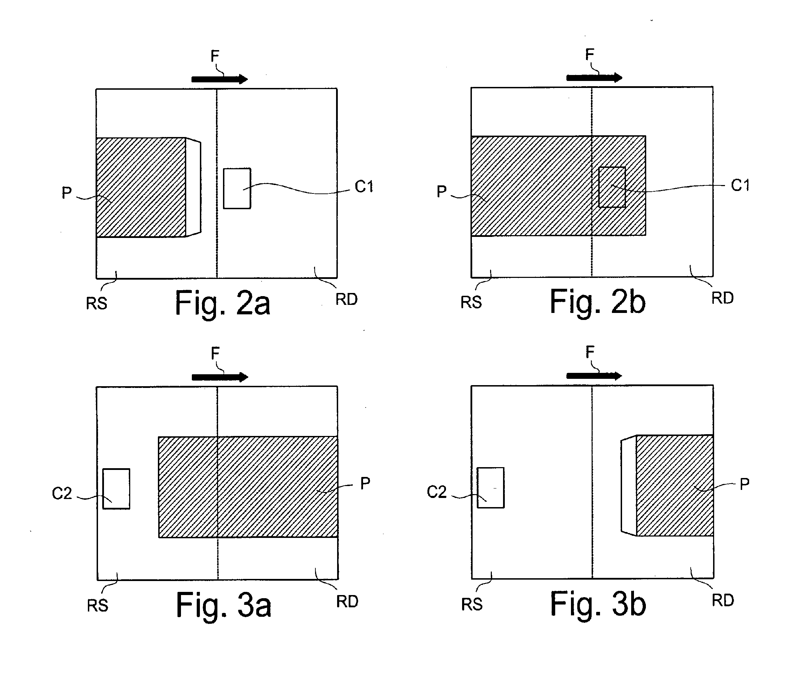

Figures 2a and 2b schematically show the identifying step of the initial image (step 101).

In the described embodiment, the control portion C1 is in the right section RD of the image, since until the head end of the product P occupies only the left section RS also its front face is visible. When the head end occupies the control portion C1, the control function of the parameters (histogram) associated to it undergoes a substantial variation. On the basis of such a variation the system 1 identifies the initial image of the product P.

In a completely analogous manner, the identification of the final image of the product, schematised in figures 3a and 3b occurs. In such a case, the control portion C2 is in the left section RS, to avoid recording also the rear side of the product, condition which happens when its tail end occupies only the right section RD of the image. In such a case, when there is no product P, the control function of the parameters (histogram) associated with the control portion C2 returns similar to that initially acquired (acquiring step 100), when this happens, the system 1 recognizes the tail end of the product and therefore identifies its final image.

In an alternative embodiment, the head end and the tail end of the product P can be detected by sensors of the type with photocells suitably arranged with respect to the camera 3. In such a case the first image series acquired could consist of a single image coinciding with the initial image of the product P.

It is also possible to foresee a system combining the two previous ones.

The selection step in each image of the product P acquired, including its initial image, of a recognition area or pattern A (step 103) consists in identifying in the left section RS of such an image, or in another suitable portion of the image, an area or portion that has an appearance that can be identified and recognized with respect to the remaining portion of the image.

In order for such a selection to be possible it is necessary for the images of the product P acquired to have a sufficient level of definition.

In a preferred embodiment, in order to obtain a good definition level it is necessary to impose that the displacement of the product P during the time of maximum exposure (t) of the sensitive element of the camera 3 (for example a CCD *charge-coupled-device*) is lower than the equivalent of a *pixel,* needing the following condition to be satisfied:

$$t \; < \; (d*D)/(V*f)$$

Where t is the time of maximum exposure of the sensitive element, d is the size of a *pixel,* f is the focal distance of the lens, D is the distance between the camera 3 and the product P, V is the maximum forward speed of the product P, with D>>f.

For example, with a digital camera with *pixel* $d=_{15}\mu$m and focal f=50mm placed at D=2m from the product P which moves forwards at a speed V=0.5 m/s, a maximum time of exposure t=1.2 thousandths of a second, is obtained.

Of course, different selections are possible.

Usefully, the focusing of the optics connected to the camera 3 is adjusted in a continuous manner by the processing unit 5, so as to obtain greater detail in the images acquired.

Once a recognition area or pattern A has been selected in the left section RS of the initial image, the system calculates (step 107) the distance between the head end and the centre of gravity of the recognition area or pattern A thus selected (first pattern selected). The evaluation of such a distance and its tracking (step 171) for each successive image of the product acquired makes it possible to keep track of the head end of the product P.

From the initial image and for each successive image up to the final image, the displacement vector of the recognition area or pattern A selected (step 104) is evaluated.

Such an estimating step (step 104) comprises the steps that, considering as forwarding direction F that going from left to right, consist of:

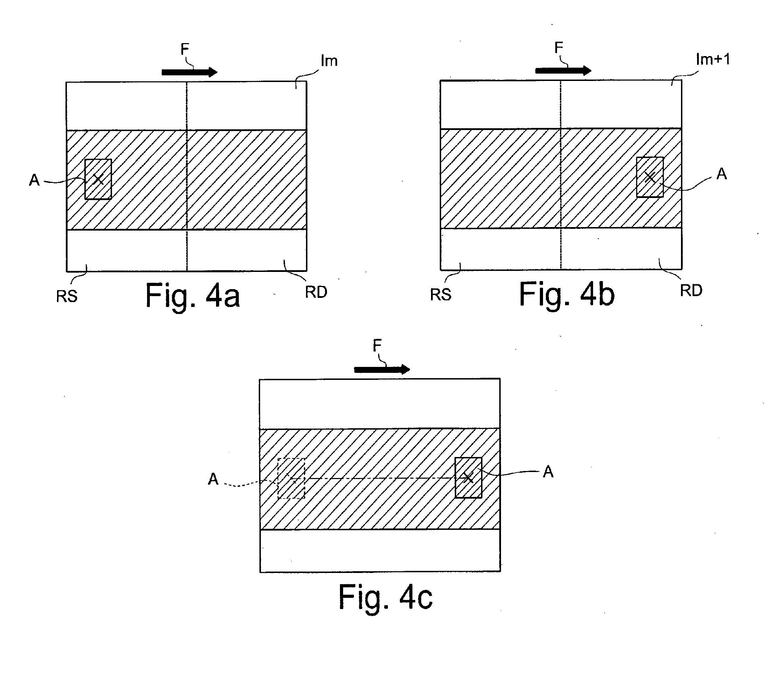

- searching the recognition area or pattern A selected in an image (Im) of the product, selected particularly in the left section RS of such an image (Im) (figure 4a), in a following image thereof, particularly of the right section RD of the image of the product immediately following it (Im+1)(step 140),
- if the search is positive, i.e. the system has tracked in the right section RD of the image (Im+1) the recognition area or pattern A selected in the preceding image (Im), calculating the value of the distance between the centre of gravity position of the recognition area or pattern A in the image where it was selected (Im) and in the following image thereof (Im+1) (figure 4c) and attributing to the displacement vector the value of the distance thus calculated (step 141).

If the search is negative, it is carried out on a successive image (Im+2) and if also such a search is negative, then the system selects a different recognition area or pattern in the source image (Im) and repeats the searching step relative to such a different recognition area or pattern selected.

In the case in which also the repeated search step is negative, then a mean value of the displacement vectors previously estimated is calculated to be attributed to the current displacement vector (step 142).

Such a last estimation can be improved at a later time, i.e. once all the images have been acquired and the relative displacement vectors have been calculated, considering a mean value of the displacement vectors of the images that precede and follow that in which the correspondence search is negative.

On the basis of the displacement vector thus estimated the distance of the head end of the product P (step 171) is updated.

The system 1 then continues by selecting a new recognition area or pattern in the left section RS of the image (Im+1) and repeats the steps described above.

The system 1 estimates the values of the displacement vectors and of the position of the head end in *pixels*; in order to convert them in metric units it is necessary to correlate (step 119) the values thus estimated to a dimensional reference parameter, for example to the distance between camera 3 and product P.

For such a purpose, as indicated above, the system 1 provides for acquiring and associating to each image of the product P the value of the distance D between the camera 3 and the portion of product P recorded in such an image (step 109).

Such a step can comprise different steps according to whether the distance D is known beforehand or not or whether it is constant or not along the entire longitudinal development of the product P.

If the distance D between the camera 3 and the product P is constant for its whole longitudinal development comprised between the head end and the tail end and has a known value, then to each image such a known value is associated.

If the distance D between the camera 3 and the product P is not known or is not constant for its whole development comprised between the head end and the tail end, different alternatives can be actuated:

- acquiring, for each portion of product P recorded by the camera 3, the value of the distance D from a distance detector made up for example of a time of flight laser sensor 7 and associating the acquired value with the relative image of the product, or
- extrapolating, for the initial image and for each successive image of the product, the value of the distance D from known dimensional reference parameters or elements and recorded in the images of the product itself and associating the extracted value with the relative image.

As a reference parameter from which to extrapolate the distance D, the height H of the product P can be used, if it is known and is constant along the entire longitudinal development of the product P.

If also the height H is not known or is not constant, it is possible to apply near to the head and tail ends of the product a respective reference element, of the label type, with known sizes and, for each image of the product, extrapolate the value of the distance D from the images of such two reference labels recorded respectively in the initial and final images of the product. The use of such two known reference labels makes it possible to detect also possible inclinations of the product P with respect to the longitudinal axis of the continuous conveyor 2.

Alternatively, it is possible to direct the camera 3 so as to record, in each image, a known portion of the continuous conveyor 2, and, for each image of the product, extrapolate the value of the distance D from the known portion of the continuous conveyor 2 recorded in it.

As can be easily understood by men skilled in the art, the images of the product P acquired and the data gathered from them (length of the product, position of the head end of the product, distance between product and camera, etc.) can be further processed to find further geometrical, dimensional or positional data features of the product P.

For example, by correlating the images of the product P to a relative or absolute time reference parameter, it is possible to find the motion law of the product P and verify possible sliding or accelerations with respect to the continuous conveyor 2, so as to be able to possibly intervene on the operation of the latter.

From the images acquired, by arranging the camera 3 inclined by a non-zero angle with respect to a horizontal plane, so as to record a portion of the continuous conveyor, it is possible to find data concerning the position of the longitudinal axis of the product P with respect to the crosswise direction of the continuous conveyor 2 or to its possible inclinations just like data relative to the shape profile of the surface of the face recorded by the camera, detecting for example concave or convex shapes. These last data can be used to intervene on the production line, for example to correct the position of the product P in inlet to a work station placed along the line.

The same applies in the case in which for each image of the product P also the distance D between the camera 3 and the portion of product P recorded in it is acquired, for example through a laser sensor 7.

As already indicated, the system 1 can comprise several cameras 3, applying the steps described above to the images acquired by each camera. In such a case it is possible to compose the images acquired by two or more cameras 3, arranged so as to frame different faces of the product P, so as to obtain an overall stereoscopic image of the entire product P.

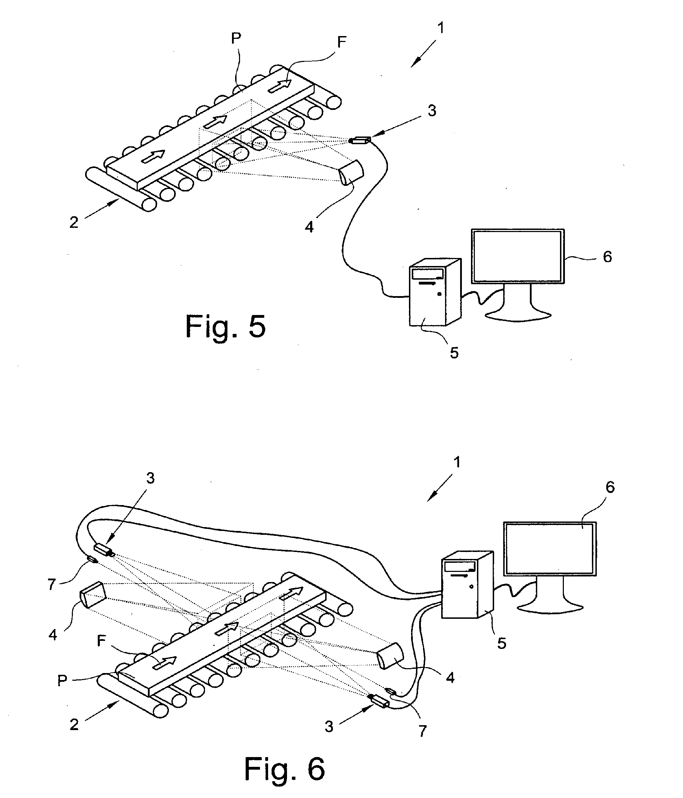

In figures from 5 to 8 different embodiments of the system 1 are shown. In figure 5 the system 1 comprises a single camera 3 placed at an angle $\alpha$ that is non-zero with respect to the horizontal plane containing the continuous conveyor 2, in such a case the portion of continuous conveyor 2 recorded in each image can be used as a reference for the acquisition of the distance D between the camera 3 and product P without it being necessary to provide a distance detector.

In figure 6 a system 1 is shown comprising two cameras 3 arranged with their axis at 90° with respect to the vertical, arranged, aligned with one another, at opposite sides of the continuous conveyor 2 so as to frame two opposite faces of the product P.

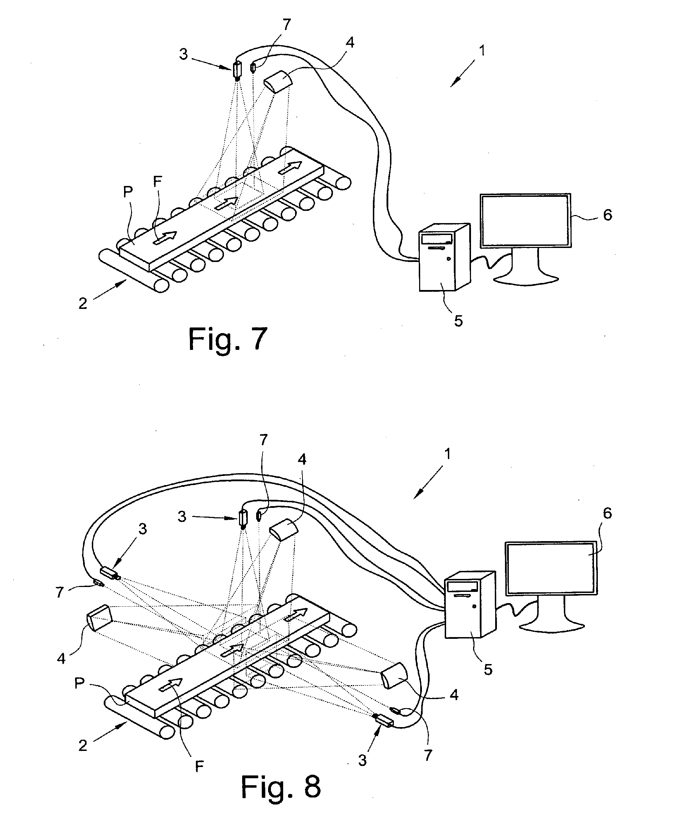

Figure 7 shows a system 1 comprising a single camera 3 placed with its axis on the vertical so as to frame the upper face of the product P being able to easily detect possible misalignments thereof with respect to the longitudinal axis of the continuous conveyor 2.

Figure 8 shows a system 1 comprising three cameras 3 placed at 90° with respect to one another.

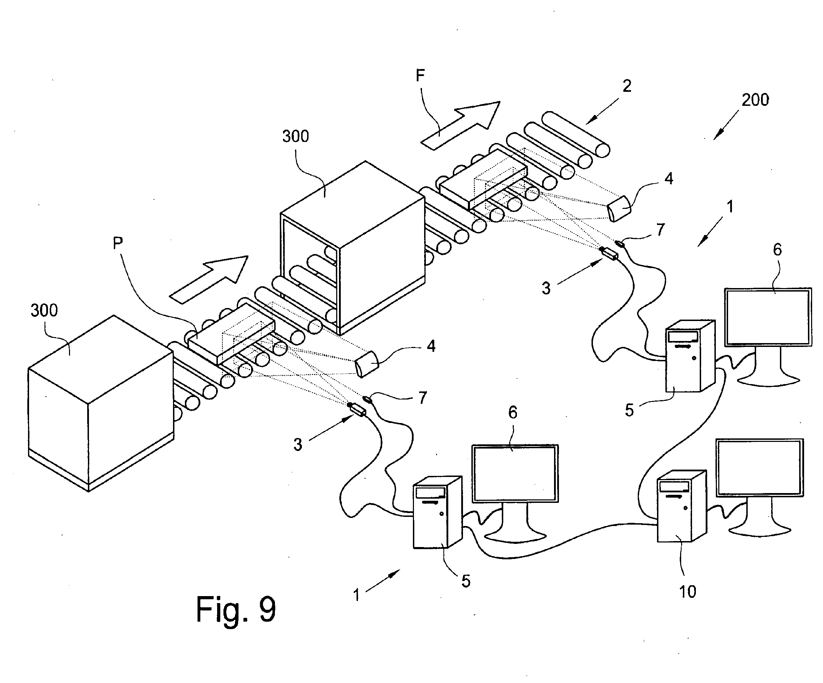

Finally, figure 9 shows a device 200 comprising a series of systems 1 applied in different locations along a production or machining line of the products P in which a continuous conveyor 2 transfers the products P between different work stations 300. In such a case the systems 1 can be connected to a central control unit 10 which oversees the management of the line itself. It is therefore possible to identify and recognize a product P in different locations through which it passes, keep track of its movement forwards along the line, determine in each location the position it has taken on etc.

From the description carried out and by the attached figures the characteristics of the method and of the system object of the present invention are clear, just as the relative advantages are also clear.

In particular, the system and the method according to the present invention make it possible to determine dimensional, geometrical and positional data of any product P while it advances along a forwarding direction defined by a continuous conveyor, particularly while it advances along a production line.

The sole condition for the system and the method according to the invention to be able to be applied is that the product P must have a surface texture that is not even or not repetitive or, if it is repetitive, it has repetitions at a distance from one another that is greater than the overall portion of product recorded in two successive images.

Therefore, the system and the method according to the invention can be applied particularly to raw, roughly shaped, roughed or half-finished steel products, of the type of thick slabs, billets, coils and the like and in general to all products that satisfy the condition indicated above, such as, for example, products made from marble or wood.

The system and the method according to the invention make it possible to determine particularly dimensional data, specifically the overall length of a product, whereas the latter proceeds along a production or machining line by providing an accurate and measurement irrespective of possible sliding or acceleration of the product itself with respect to the continuous conveyor on which it rests and irrespective of the dimensions of the product itself.

The system and the method according to the present invention also make it possible to identify and recognize a product along a production line, keeping track of its position and detecting its possible misalignments with respect to the longitudinal axis of the continuous conveyor, so as to be able to provide data useful to make suitable interventions on the operation of the continuous conveyor and/or of the work stations connected by it, for example to align the product with respect to the inlet into a work station.

Such purposes are moreover achieved with a system which uses known devices, easily found and with low costs and can be applied to existing production lines without it being necessary to carry out particular installation interventions.

The system according to the present invention, moreover, is placed alongside and at a distance from the continuous conveyor, leaving it practically free to access for any intervention.

The system and the method thus conceived can undergo numerous modifications and variants covered by the invention as defined in the apppended claims, moreover, all the details can be replaced by technically equivalent elements. In practice the materials used, as well as the sizes, can be any according to the technical requirements.

## Claims

1. A method to detect and to determine geometrical, dimensional and positional features of products (P) transported by a continuous conveyor (2), particularly of raw, roughly shaped, roughed or half-finished steel products, moving forward with a transport speed lower or equal to a maximum transport speed (V), comprising the steps consisting of:

- acquiring (100), through at least an image acquisition device (3) placed crosswise to the forwarding direction (F) of a continuous conveyor and at a distance from it, at least a first series of successive images showing a same area across which runs said continuous conveyor (2), on which rests at least a product (P);
- identifying (101) in said first image series an initial image including the head end of said product (P) considered in respect to said forwarding direction (F);
- acquiring (102), through said image acquisition device (3), at least a second series of successive images showing said product moving forward along said forwarding direction (F), with an acquisition frequency so as to obtain, at said maximum transport speed (V), a partial overlapping of two successive images;
- selecting (103), in said initial image and in each image of said second series of successive images showing said product, a recognition area (A);
- estimating (104) the displacement vector of the recognition area (A), selected in said initial image and in each image of said second image series, between the image where it was selected and an image following the one where it was selected;
- identifying (105) among the images of said second successive image series showing said product (P) a final image containing the tail end of said product considered in respect to said forwarding direction (F);
- processing (106) the estimated displacement vectors and/or the acquired images of said product (P) according to calculation and image processing algorithms to obtain at least a dimensional, geometrical or positional characteristic data of said product.

2. Method according to claim 1, comprising also a step consisting in joining (161), on the base of the estimated displacement vectors, the images of said product (P) comprised between and comprising said initial image and said final image to form a unique image identifying said product.

3. Method according to claims 1 or 2, comprising also the step (107; 171) consisting of estimating the distance between said product (P) head end and the recognition area (A) selected in said initial image and in each image of said second successive image series showing said product (P) up to said final image so as to be able to track the position of said head end.

4. Method according to claim 3, also comprising the step (108) consisting of estimating the distance between said product (P) tail end and the recognition area (A) selected in the image of said product preceding said final image.

5. Method according to one or more of the preceding claims, also comprising the step (109) consisting of acquiring and associating to said initial image and to each image of said second image series at least one positional and/or dimensional reference parameter on the base of which to process said images and/or displacement vectors related to them.

6. Method according to claim 5, wherein said dimensional reference parameter consists in the distance (D) between said image acquisition device (3) and the portion of said product recorded in the corresponding image.

7. Method according to claim 6, wherein said step (109) of acquiring and associating to said initial image and each image of said second image series at least a dimensional reference parameter, comprises the steps consisting of:

- if the distance (D) between said image acquisition device and said product is constant for the whole development of said product comprised between said head and tail ends and has a known value, associating to said initial image and to each image of said second image series said known value,
- if the distance (D) between said image acquisition device and said product is not known or is not constant for the whole development of said product comprised between said head and tail ends, thus
- acquiring, for each portion of said product recorded by the image acquisition device (3), the value of said distance from a distance detector and associating the acquired value with the relative image of said product, or
- extrapolating, for said initial image and for each image of said second image series, the value of said distance from parameters or dimensional reference elements known and recorded in the images of said product and associating the extracted value to the relative image.

8. Method according to one or more of the claims from 3 to 7, also comprising the steps consisting of:

- associating to said initial image and to each image of the second image series at least a time reference parameter selected between an absolute time reference parameter and a time reference parameter relative to said continuous conveyor,

- processing of said displacement vectors and said distances on the basis of said time reference parameter to determine the motion law of said product.

9. Method according to one or more of the preceding claims, wherein said estimate stage (104) of said displacement vector comprises the steps consisting of:

- searching (140) the recognition area (A), selected in said initial image or in an image of said second image series, in a following image thereof,

- if the search is positive, estimating (141) the value of the distance between the centre of gravity position of said recognition area (A) in the image where said recognition area (A) was selected and in the following image and attributing to the displacement vector the distance value thus calculated,

- if the search is negative, selecting a different recognition area in the source image and repeating the search step,

- if the repeated search step is negative, calculating (142) a mean value of the displacement vectors previously estimated and attributing to the current displacement vector the mean value thus calculated.

10. Method according to one or more of the preceding claims, wherein the identification steps of said initial and final images comprise the step consisting of detecting a variation of a control function of parameters of respective reference portions (C1, C2) selected in the images of said first image series showing said area across which runs said continuous conveyor (2).

11. Method according to one or more of the preceding claims, wherein said dimensional characteristics data is the length (LP) of said product.

12. Method according to one or more of the preceding claims, wherein said steps take place in real time with the acquisition of said successive images of said first series and of said second series.

13. Method according to one or more of the preceding claims, wherein said image acquisition device is placed with its axis on a plane, vertical and orthogonal to said forwarding direction (F), and that is oriented with an angle $\alpha$ in respect to the vertical $0° <$

$\alpha < 90°$.

14. Method according to claim 13, applied to the acquired images from at least two of said image acquisition devices (3) arranged with their axes oriented according to different angles $\alpha$ so as to record at least two faces, contiguous or opposite, of said product.

15. A system (1) to detect and to determine geometrical, dimensional and positional features of products (P) transported by a continuous conveyor (2), particularly of raw, roughly shaped, roughed or half-finished steel products, moving forward with a transport speed lower or equal to a maximum transport speed (V), comprising at least an image acquisition device (3) placed crosswise to the forwarding speed of a continuous conveyor (2) and at a defined distance from said continuous conveyor and that is associated to a processing unit (5) able to implement a method according to one or more of the claims from 1 to 14.

16. System (1) according to claim 15, also comprising at least a device (7) to detect the distance between said image acquisition device (3) and said continuous conveyor (2) or a product (P) located on it, wherein said distance detecting device is associated to said processing unit (5).

17. System (1) according to claim 15 or 16, wherein said image acquisition device (3) is placed with its own axis on a plane vertical and orthogonal to said forwarding direction and oriented with an angle $\alpha$ compared with the vertical of $0° < \alpha < 90°$.

18. System (1) according to claim 17, comprising at least two said image acquisition devices (3) placed with their axes oriented according to different angles so as to record at least two faces, contiguous or opposite, of said product (P).

19. A device (200) for monitoring the flow of products transported by an continuous conveyor (2) between different stations (300) of a production or manufacturing line, comprising two or more systems (1) according to one or more claims from 15 to 18, placed along said continuous conveyor (2) and whose processing units (5) are interfaced to a central processing unit (10).

**Patentansprüche**

1. Verfahren zum Detektieren und Ermitteln geometrischer, abmessungsbezogener sowie positionsbezogener Merkmale von Produkten (P), die durch einen kontinuierlichen Förderer (2) transportiert werden, insbesondere roher, grob geformter, grober oder halb fertiggestellter Stahlprodukte, die sich mit einer Transportgeschwindigkeit vorwärtsbewegen, die kleiner oder gleich einer maximalen Transportgeschwindigkeit (V) ist, mit den Schritten:

- Aufnehmen (100) zumindest einer ersten Serie aufeinanderfolgender Bilder, die einen selben Bereich zeigen, über den der kontinuierliche Förderer (2) läuft, auf dem zumindest ein Produkt (P) liegt, durch zumindest eine Bildaufnahmevorrichtung (3), die quer zu der Vorwärtsrichtung (F) eines kontinuierlichen Förderers und unter einer Distanz davon platziert ist;
- Identifizieren (101) eines Anfangsbildes in der ersten Bildserie, das das Vorderende des Produktes (P) aufweist, das in Bezug auf die Vorwärtsrichtung (F) betrachtet wird;
- Aufnehmen (102) zumindest einer zweiten Serie aufeinanderfolgender Bilder, die das Produkt zeigen, das sich vorwärts entlang der Vorwärtsrichtung (F) bewegt, durch die Bildaufnahmevorrichtung (3) mit einer Aufnahmefrequenz, um bei der maximalen Transportgeschwindigkeit (V) eine Teilüberlappung von zwei aufeinanderfolgenden Bildern zuerhalten;
- Auswählen (103) eines Erkennungsbereiches (A) in dem anfänglichen Bild und in jedem Bild der zweiten Serie von aufeinanderfolgenden Bildern, die das Produkt zeigen;
- Schätzen (104) des Verstellvektors des Erkennungsbereiches (A), der in dem Anfangsbild und in jedem Bild der zweiten Bildserie gewählt ist, zwischen dem Bild, in dem er gewählt wurde, und einem Bild folgend darauf, in dem er gewählt wurde;
- Identifizieren (105) unter den Bildern der zweiten aufeinanderfolgenden Bildserie, die das Produkt (P) zeigen, eines Endbildes, das das hintere Ende des Produktes enthält, das in Bezug auf die Vorwärtsrichtung (F) betrachtet ist;
- Verarbeiten (106) der geschätzten Verstellvektoren und/oder der aufgenommenen Bilder des Produktes (P) gemäß Berechnungs- und Bildverarbeitungsalgorithmen, um zumindest abmessungsbezogene, geometrische oder positionsbezogene charakteristische Daten des Produktes zu erhalten.

2. Verfahren nach Anspruch 1, ferner mit einem Schritt, der aus einem Verbinden (161) der Bilder des Produktes (P), die zwischen dem Anfangsbild und dem Endbild umfasst sind und das Anfangsbild und das Endbild umfassen, auf der Basis der geschätzten Verstellvektoren, um ein eindeutiges Bild zu bilden, das das Produkt identifiziert.

3. Verfahren nach einem der Ansprüche 1 oder 2, ferner mit dem Schritt (107; 171), der aus einem Schätzen der Distanz zwischen dem vorderen Ende des Produktes (P) und dem Erkennungsbereich (A) besteht, der in dem Anfangsbild und in jedem Bild der zweiten aufeinanderfolgenden Bildserie gewählt ist, die das Produkt (P) bis zu dem Endbild zeigt, um so in der Lage zu sein, die Position des vorderen Endes nachzuverfolgen.

4. Verfahren nach Anspruch 3, ferner mit dem Schritt (108), der aus dem Schätzen der Distanz zwischen dem hinteren Ende des Produktes (P) und dem Erkennungsbereich (A) besteht, der in dem Bild des Produktes gewählt ist, das dem Endbild vorhergeht.

5. Verfahren nach einem oder mehreren der vorhergehenden Ansprüche, ferner mit dem Schritt (109), der ein Aufnehmen des Anfangsbildes und jedes Bildes der zweiten Bildserie und ein Zuordnen zumindest eines Positions- und/oder Abmessungsreferenzparameters zu dem Anfangsbild und zu jedem Bild der zweiten Bildserie umfasst, wobei auf Basis dessen die Bilder und/oder Verstellvektoren, die damit in Verbindung stehen, verarbeitet werden.

6. Verfahren nach Anspruch 5, wobei der Abmessungsreferenzparameter in der Distanz (D) zwischen der Bildaufnahmevorrichtung (3) und dem Anteil des Produktes, der in dem entsprechenden Bild aufgezeichnet ist, besteht.

7. Verfahren nach Anspruch 6, wobei der Schritt (109) zum Aufnehmen des Anfangsbildes und jedes Bildes der zweiten Bildserie und zum Zuordnen zumindest eines Abmessungsreferenzparameters zu dem Anfangsbild und jedem Bild der zweiten Bildserie die Schritte umfasst:

- falls die Distanz (D) zwischen der Bildaufnahmevorrichtung und dem Produkt für die gesamte Entwicklung des Produktes konstant ist, das zwischen dem vorderen und hinteren Ende umfasst ist und einen bekannten Wert aufweist, der bekannte Wert dem Anfangsbild und jedem Bild der zweiten Bildserie zugeordnet wird,
- falls die Distanz (D) zwischen der Bildaufnahmevorrichtung und dem Produkt für die gesamte Entwicklung des Produktes, das zwischen dem vorderen und hinteren Ende umfasst ist, nicht bekannt oder nicht konstant ist, somit umfasst ist:
- Aufnehmen für jeden Abschnitt des Produkts, das von der Bildaufnahmevorrichtung (3) aufgezeichnet wird, des Wertes der Distanz von einem Distanzdetektor und Zuordnen des aufgenommenen Wertes zu dem relativen Bild des Produktes, oder
- Extrapolieren des Wertes der Distanz von Parametern oder von Abmessungsreferenzelementen, die bekannt und in den Bildern des Produktes aufgezeichnet sind, für das Anfangsbild und für jedes Bild der zweiten Bildserie und Zuordnen des entnommenen Wertes zu dem relativen Bild.

8. Verfahren nach einem oder mehreren der Ansprüche 3 bis 7, ferner mit den Schritten:

   - Zuordnen zumindest eines Zeitreferenzparameters, der zwischen einem absoluten Zeitreferenzparameter und einem Zeitreferenzparameter relativ zu dem kontinuierlichen Förderer gewählt ist, zu dem anfänglichen Bild und zu jedem Bild der zweiten Bildserie,
   - Verarbeiten der Verstellvektoren und der Distanzen auf der Basis des Zeitreferenzparameters, um das Bewegungsgesetz des Produktes zu ermitteln.

9. Verfahren nach einem oder mehreren der vorhergehenden Ansprüche, wobei die Schätzstufe (104) des Verstellvektors die Schritte umfasst:

   - Suchen (140) des Erkennungsbereiches (A), der in dem Anfangsbild oder in einem Bild der zweiten Bildserie gewählt ist, in einem folgenden Bild davon,
   - falls die Suche positiv ist, Schätzen (141) des Wertes der Distanz zwischen der Schwerpunktsposition des Erkennungsbereiches (A) in dem Bild, wo der Erkennungsbereich (A) gewählt wurde, und in dem folgenden Bild, und Zuweisen des somit berechneten Distanzwertes zu dem Verstellvektor,
   - falls die Suche negativ ist, Auswählen eines anderen Erkennungsbereiches in dem Quellenbild und Wiederholen des Suchschrittes,
   - falls der wiederholte Suchschritt negativ ist, Berechnen (142) eines Mittelwertes der Verstellvektoren, die vorher geschätzt wurden, und Zuweisen des somit berechneten Mittelwertes zu dem gegenwärtigen Verstellvektor.

10. Verfahren nach einem oder mehreren der vorhergehenden Ansprüche, wobei die Identifikationsschritte der anfänglichen und Endbilder den Schritt umfassen, der enthält, dass eine Variation einer Steuerfunktion von Parametern jeweiliger Referenzanteile (C1, C2) detektiert wird, die in den Bildern der ersten Bildserie gewählt sind, die den Bereich zeigt, über den der kontinuierliche Förderer (2) läuft.

11. Verfahren nach einem oder mehreren der vorhergehenden Ansprüche, wobei die charakteristischen Abmessungsdaten die Länge (LP) des Produktes umfassen.

12. Verfahren nach einem oder mehreren der vorhergehenden Ansprüche, wobei die Schritte in Echtzeit mit der Aufnahme der aufeinanderfolgenden Bilder der ersten Serie und der zweiten Serie stattfinden.

13. Verfahren nach einem oder mehreren der vorhergehenden Ansprüche, wobei die Bildaufnahmevorrichtung mit ihrer Achse an einer Ebene vertikal und orthogonal zu der Vorwärtsrichtung (F) platziert ist und die unter einem Winkel $\alpha$ in Bezug auf die vertikale $0° < \alpha < 90°$ orientiert ist.

14. Verfahren nach Anspruch 13, das auf die aufgenommenen Bilder von zumindest zwei der Bildaufnahmevorrichtungen (3) angewendet ist, die mit ihren Achsen gemäß verschiedenen Winkeln $\alpha$ orientiert angeordnet sind, um so zumindest zwei Seiten, angrenzend oder gegenüberliegend, des Produkts aufzuzeichnen.

15. System (1) zum Detektieren und Ermitteln geometrischer, abmessungsbezogener und positionsbezogener Merkmale von Produkten (P), die durch einen kontinuierlichen Förderer (2) transportiert werden, insbesondere roher, grob geformter, grober oder halb fertiggestellter Stahlprodukte, die sich mit einer Transportgeschwindigkeit vorwärtsbewegen, die kleiner oder gleich einer maximalen Transportgeschwindigkeit (V) ist, mit zumindest einer Bildaufnahmevorrichtung (3), die quer zu der Vorwärtsgeschwindigkeit eines kontinuierlichen Förderers (2) und unter einer definierten Distanz von dem kontinuierlichen Förderer platziert ist und die einer Verarbeitungseinheit (5) zugeordnet ist, die in der Lage ist, ein Verfahren nach einem oder mehreren der Ansprüche 1 bis 14 auszuführen.

16. System (1) nach Anspruch 15, auch mit zumindest einer Vorrichtung (7), um die Distanz zwischen der Bildaufnahmevorrichtung (3) und dem kontinuierlichen Förderer (2) oder einem Produkt (P), das darauf angeordnet ist, zu detektieren, wobei die Distanzdetektionsvorrichtung der Verarbeitungseinheit (5) zugeordnet ist.

17. System (1) nach einem der Ansprüche 15 oder 16, wobei die Bildaufnahmevorrichtung (3) mit ihrer eigenen Achse an einer Ebene vertikal und orthogonal zu der Vorwärtsrichtung platziert und unter einem Winkel $\alpha$ im Vergleich zu der vertikalen von $0° < \alpha < 90°$ orientiert ist.

18. System (1) nach Anspruch 17, mit zumindest zwei Bildaufnahmevorrichtungen (3), die mit ihren Achsen so platziert sind, dass sie gemäß verschiedenen Winkeln orientiert sind, um zumindest zwei Seiten, angrenzend oder gegenüberliegend, des Produktes (P) aufzuzeichnen.

**19.** Vorrichtung (200) zum Überwachen des Flusses von Produkten, die durch einen kontinuierlichen Förderer (2) zwischen verschiedenen Stationen (300) einer Produktions- oder Herstelllinie transportiert werden, mit zwei oder mehr Systemen (1) nach einem oder mehreren der Ansprüche 15 bis 18, die entlang des kontinuierlichen Förderers (2) platziert sind, und deren Verarbeitungseinheiten (5) über Schnittstelle mit einer zentralen Verarbeitungseinheit (10) verbunden sind.

## Revendications

**1.** Procédé de détection et de détermination de caractéristiques géométriques, dimensionnelles et de position de produits (P) transportés par un transporteur continu (2), notamment de produits en acier bruts, de forme grossière, dégrossis ou semi-finis, se déplaçant en avant avec une vitesse de transport inférieure ou égale à une vitesse de transport maximale (V), comprenant les étapes consistant à :

- acquérir (100), à l'aide d'au moins un dispositif d'acquisition d'images (3) placé en travers de la direction d'avance (F) d'un transporteur continu et à distance de celui-ci, au moins une première série d'images successives montrant une même région traversée par ledit transporteur continu (2), sur lequel repose au moins un produit (P) ;
- identifier (101) dans ladite première série d'images une image initiale comportant l'extrémité de tête dudit produit (P) relativement à ladite direction d'avance (F) ;
- acquérir (102), à l'aide dudit dispositif d'acquisition d'images (3), au moins une deuxième série d'images successives montrant ledit produit se déplaçant en avant le long de ladite direction d'avance (F), avec une fréquence d'acquisition afin d'obtenir, à ladite vitesse de transport maximale (V), un chevauchement partiel de deux images successives ;
- sélectionner (103), dans ladite image initiale et dans chaque image de ladite deuxième série d'images successives montrant ledit produit, une région de reconnaissance (A) ;
- estimer (104) le vecteur de déplacement de la région de reconnaissance (A), sélectionnée dans ladite image initiale et dans chaque image de ladite deuxième série d'images, entre l'image où elle a été sélectionnée et une image qui suit celle où elle a été sélectionnée ;
- identifier (105) parmi les images de ladite deuxième série d'images successives montrant ledit produit (P), une image finale contenant l'extrémité de queue dudit produit, relativement à ladite direction d'avance (F) ;
- traiter (106) les vecteurs de déplacement estimés et/ou les images acquises dudit produit (P) selon des algorithmes de calcul et de traitement d'image pour obtenir au moins une donnée de caractéristique dimensionnelle, géométrique ou de position dudit produit.

**2.** Procédé selon la revendication 1, comprenant en outre une étape consistant à relier (161), en se basant sur les vecteurs de déplacement estimés, les images dudit produit (P) comprises entre et incluant ladite image initiale et ladite image finale pour former une unique image identifiant ledit produit.

**3.** Procédé selon la revendication 1 ou 2, comprenant en outre une étape (107 ; 171) consistant à estimer la distance qui sépare l'extrémité de tête dudit produit (P) de la région de reconnaissance (A) sélectionnée dans ladite image initiale et dans chaque image de ladite deuxième série d'images successives montrant ledit produit (P) jusqu'à ladite image finale afin de pouvoir suivre la position de ladite extrémité de tête.

**4.** Procédé selon la revendication 3, comprenant en outre l'étape (108) consistant à estimer la distance qui sépare l'extrémité de queue dudit produit (P) de la région de reconnaissance (A) sélectionnée dans l'image dudit produit qui précède ladite image finale.

**5.** Procédé selon l'une ou plusieurs des revendications précédentes, comprenant en outre l'étape (109) consistant à acquérir et associer à ladite image initiale et à chaque image de ladite deuxième série d'images au moins un paramètre de référence de position et/ou dimensionnelle sur la base duquel traiter lesdites images et/ou lesdits vecteurs de déplacement qui s'y rapportent.

**6.** Procédé selon la revendication 5, dans lequel ledit paramètre de référence dimensionnelle est la distance (D) qui sépare ledit dispositif d'acquisition d'images (3) de la partie dudit produit enregistrée dans l'image correspondante.

**7.** Procédé selon la revendication 6, dans lequel ladite étape (109) d'acquisition et d'association à ladite image initiale et à chaque image de ladite deuxième série d'images d'au moins un paramètre de référence dimensionnelle, comprend les étapes suivantes :

- si la distance (D) qui sépare ledit dispositif d'acquisition d'images dudit produit est constante pour toute l'étendue dudit produit comprise entre lesdites extrémités de tête et de queue et a une valeur connue, associer à ladite image initiale et à chaque image de ladite deuxième série d'images ladite valeur connue,
- si la distance (D) qui sépare ledit dispositif d'acquisition d'images dudit produit n'est pas connue ou n'est pas constante pour toute l'étendue dudit produit comprise entre lesdites extrémités de tête et de queue, alors

- acquérir, pour chaque partie dudit produit enregistrée par le dispositif d'acquisition d'images (3), la valeur de ladite distance fournie par un détecteur de distance et associer la valeur acquise à l'image relative dudit produit, ou
- extrapoler, pour ladite image initiale et pour chaque image de ladite deuxième série d'images, la valeur de ladite distance à partir de paramètres ou d'éléments de référence dimensionnelle connus et enregistrés dans les images dudit produit et associer la valeur extraite à l'image relative.

8. Procédé selon l'une ou plusieurs des revendications 3 à 7, comprenant en outre les étapes suivantes :

- associer à ladite image initiale et à chaque image de la deuxième série d'images au moins un paramètre de référence temporelle choisi entre un paramètre de référence temporelle absolue et un paramètre de référence temporelle par rapport audit transporteur continu,
- traiter lesdits vecteurs de déplacement et lesdites distances en se basant sur ledit paramètre de référence temporelle pour déterminer la loi de mouvement dudit produit.

9. Procédé selon l'une ou plusieurs des revendications précédentes, dans lequel ladite étape d'estimation (104) dudit vecteur de déplacement comprend les étapes suivantes :

- rechercher (140) la région de reconnaissance (A), sélectionnée dans ladite image initiale ou dans une image de ladite deuxième série d'images, dans une image qui suit celle-ci,
- si la recherche est positive, estimer (141) la valeur de la distance qui sépare la position du centre de gravité de ladite région de reconnaissance (A) dans l'image où la région de reconnaissance (A) a été choisie de l'image suivante, et attribuer au vecteur de déplacement la valeur de distance ainsi calculée,
- si la recherche est négative, sélectionner une région de reconnaissance différente dans l'image source et répéter l'étape de recherche,
- si la nouvelle étape de recherche est négative, calculer (142) une valeur moyenne des vecteurs de déplacement précédemment estimés et attribuer au vecteur de déplacement courant la valeur moyenne ainsi calculée.

10. Procédé selon l'une ou plusieurs des revendications précédentes, dans lequel les étapes d'identification desdites images initiale et finale comprennent l'étape consistant à détecter une variation d'une fonction de commande de paramètres de parties de référence respectives (C1, C2) choisies dans les images de ladite première série d'images qui montrent ladite région traversée par ledit transporteur continu (2).

11. Procédé selon l'une ou plusieurs des revendications précédentes, dans lequel ladite donnée de caractéristique dimensionnelle est la longueur (LP) dudit produit.

12. Procédé selon l'une ou plusieurs des revendications précédentes, dans lequel lesdites étapes ont lieu en temps réel avec l'acquisition desdites images successives de ladite première série et de ladite deuxième série.

13. Procédé selon l'une ou plusieurs des revendications précédentes, dans lequel ledit dispositif d'acquisition d'images est placé avec son axe sur un plan, vertical et orthogonal à ladite direction d'avance (F), et qui est orienté avec un angle $\alpha$ par rapport à la verticale, $0° < \alpha < 90°$.

14. Procédé selon la revendication 13, appliqué aux images acquises par au moins deux desdits dispositifs d'acquisition d'images (3) disposés avec leurs axes orientés selon des angles $\alpha$ différents afin d'enregistrer au moins deux faces, contiguës ou opposées, dudit produit.

15. Système (1) pour détecter et déterminer des caractéristiques géométriques, dimensionnelles et de position de produits (P) transportés par un transporteur continu (2), notamment de produits en acier bruts, de forme grossière, dégrossis ou semi-finis, se déplaçant en avant avec une vitesse de transport inférieure ou égale à une vitesse de transport maximale (V), comprenant au moins un dispositif d'acquisition d'images (3) placé en travers de la vitesse d'avance d'un transporteur continu (2) et à une distance définie de ce transporteur continu et qui est associé à une unité de traitement (5) apte à mettre en oeuvre un procédé selon l'une ou plusieurs des revendications 1 à 14.

16. Système (1) selon la revendication 15, comprenant en outre au moins un dispositif (7) pour détecter la distance qui sépare ledit dispositif d'acquisition d'images (3) dudit transporteur continu (2) ou d'un produit (P) situé sur celui-ci, dans lequel ledit dispositif de détection de distance est associé à ladite unité de traitement (5).

17. Système (1) selon la revendication 15 ou 16, dans lequel ledit dispositif d'acquisition d'images (3) est placé avec son axe sur un plan vertical et orthogonal à ladite direction d'avance et orienté avec un angle $\alpha$ par rapport à la verticale, où $0° < \alpha < 90°$.

18. Système (1) selon la revendication 17, comprenant au moins deux desdits dispositifs d'acquisition d'images (3) disposés avec leurs axes orientés selon des angles différents afin d'enregistrer au moins deux faces, contiguës ou opposées, dudit produit (P).

19. Dispositif (200) de surveillance du flux de produits transportés par un transporteur continu (2) entre différents postes (300) d'une chaîne de production ou de fabrication, comprenant deux systèmes (1) ou plus selon l'une ou plusieurs des revendications 15 à 18, placés le long dudit transporteur continu (2) et dont les unités de traitement (5) sont reliées au moyen d'une interface à une unité de traitement centrale (10).

Fig. 1

Fig. 2b

Fig. 2a

Fig. 3b

Fig. 3a

F

Im

A ✕

RS        Fig. 4a        RD

F

Im+1

A ✕

RS        Fig. 4b        RD

F

A ⌐ ┐        ✕   A

Fig. 4c

EP 2 553 661 B1

18

Fig. 5

Fig. 6

Fig. 7

Fig. 8

Fig. 9

Image acquisition — 100

Head end of the product Identification — 101

Negative search

Positive search

Acquiring the distance between the camera and the product — 109

Selecting a recognition area (first pattern) — 103

Estimating the distance between the head end of the product and the centre of gravity of the first pattern selected — 107

Correlating it to the distance between the camera and the product — 119

Image acquisition — 102

105 — Tail end of the product Identification

Positive search

Estimating the distance between the tail end of the product and the centre of gravity of the selected pattern — 108

Negative search

Acquiring the distance between the camera and the product — 109

Acquiring the distance between the camera and the product — 109

104

141

119

Estimating the displacement vector (distance between the centre of gravity position of the selected recognition area between the previous and the current image)

140 — Searching for recognition area correspondance (pattern)

Correspondance not found

Correspondance found

Correlating it to the distance between the camera and the product — 119

141

142

Estimating the displacement vector (distance between the centre of gravity position of the selected recognition area between the previous and the current image)

Estimating the displacement vector (average value)

Calculating the total length of the product

Image composition (whole product image)

Correlating it to the distance between the camera and the product — 119

160

106

161

Updating the distance between the head end of the product and the current pattern (tracking) — 171

Selecting a recognition area (new pattern) — 103

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20000019784
- JP 2004283865 A
- KR 20040040562
- JP 2026210 A
- US 4152767 A
- JP 11291008 A